# EUROPEAN PATENT APPLICATION

(11) **EP 3 471 251 A1**
(43) Date of publication of application: **17.04.2019**
(21) Application number: 17812931.8
(22) Date of filing: 28.02.2017
(51) Int. Cl.: H02M 3/155

(54) **MULTI-PHASE DC/DC CONVERTER, COMPUTER PROGRAM, AND CONTROL METHOD FOR MULTI-PHASE DC/DC CONVERTER**

(30) Priority: 14.06.2016 JP 2016117995
(71) Applicant: Sumitomo Electric Industries, Ltd., Osaka-shi, Osaka 541-0041 (JP)
(72) Inventor: SANO, Takaaki, Osaka-shi Osaka 554-0024 (JP)
(74) Representative: Boult Wade Tennant LLP
(86) International application number: PCT/JP2017/007697
(87) International publication number: WO 2017/217022

(57) **Abstract**

A multi-phase DC/DC converter comprises a current detection unit that is connected at a stage subsequent to a connection point to which an output end of each of the DC-DC converters is connected and that detects output current of each of the DC-DC converters, a control unit that controls the switching device of each of the DC-DC converters so as to turn on the switching device at a different timing, and an adjustment unit that adjusts an ON time period of the switching device upon ON-OFF operation based on the output current of each of the DC-DC converters detected by the current detection unit in a case where control is performed by the control unit.

## Description

### [Technical Field]

The present invention relates to a multi-phase DC-DC converter, a computer program and a control method for the multi-phase DC-DC converter.

The present application claims the benefit of Japanese Patent Application No. 2016-117995 filed on June 14, 2016, the entire contents of which are herein incorporated by reference.

### [Background Art]

A DC-DC converter has been used for an on-board device and industrial equipment. Such a DC-DC converter employs, for example, a so-called multi-phase DC-DC converter (also referred to as an interleaved DC-DC converter) to reduce ripple in direct current (DC) to be supplied to a load.

The multi-phase DC-DC converter includes multiple DC-DC converters connected in parallel, provides the timings of the current output from the respective DC-DC converters with phase differences to thereby distribute the current, and achieves balancing of current between the respective phases by an effect of the current output from the respective DC-DC converters being cancelled each other out (see Patent Document 1).

### [Prior Art Document]

### [Patent Document]

[Patent Document 1] Japanese Patent Application Laid-Open No. 2015-220976

### [Summary of Invention]

A multi-phase DC-DC converter according to the present disclosure is a multi-phase DC-DC converter including a plurality of DC-DC converters connected in parallel, each of the DC-DC converters including a switching device performing ON-OFF operation. The multiphase DC-DC converter comprises: a current detection unit that is connected at a stage subsequent to a connection point to which an output end of each of the DC-DC converters is connected, and that detects output current of each of the DC-DC converters; a control unit that controls the switching device of each of the DC-DC converters so as to turn on the switching device at a different timing; and an adjustment unit that adjusts an ON time period of the switching device upon ON-OFF operation based on the output current of each of the DC-DC converters detected by the current detection unit in a case where control is performed by the control unit.

A multi-phase DC-DC converter according to the present disclosure is a multi-phase DC-DC converter including a plurality of DC-DC converters connected in parallel, each of the DC-DC converters including a switching device performing ON-OFF operation. The multi-phase DC-DC converter comprises: a current detection unit that is connected at a stage subsequent to a connection point to which an output end of each of the DC-DC converters is connected, and that detects output current of each of the DC-DC converters; a control unit that controls ON-OFF of the switching device by changing a duty ratio of the switching device of each of the DC-DC converters to a predetermined value at a different timing for a required time period; and an adjustment unit that adjusts an ON time period of the switching device upon ON-OFF operation based on the output current of each of the DC-DC converters detected by the current detection unit in a case where control is performed by the control unit.

A computer program according to the present disclosure is a computer program causing a computer to control a multi-phase DC-DC converter including a plurality of DC-DC converters connected in parallel, each of the DC-DC converters including a switching device performing ON-OFF operation. The computer program causes the computer to function as: a current obtainment unit that obtains output current of each of the DC-DC converters from a current detection unit connected at a stage subsequent to a connection point to which an output end of each of the DC-DC converters is connected; a control unit that controls the switching device of each of the DC-DC converters so as to turn on the switching device at a different timing; and an adjustment unit that adjusts an ON time period of the switching device upon ON-OFF operation based on the obtained output current of each of the DC-DC converters in a case where control is performed by the control unit.

A computer program according to the present disclosure is a computer program causing a computer to control a multi-phase DC-DC converter including a plurality of DC-DC converters connected in parallel, each of the DC-DC converters including a switching device performing ON-OFF operation. The computer program causes the computer to function as: a current obtainment unit that obtains output current of each of the DC-DC converters from a current detection unit connected at a stage subsequent to a connection point to which an output end of each of the DC-DC converters is connected; a control unit that controls ON-OFF of the switching device by changing a duty ratio of the switching device of each of the DC-DC converters to a predetermined value at a different timing for a required time period; and an adjustment unit that adjusts an ON time period of the switching device upon ON-OFF operation based on the obtained output current of each of the DC-DC converters in a case where control is performed by the control unit.

A control method for a multi-phase DC-DC converter according to the present disclosure is a control method for a multi-phase DC-DC converter including a plurality of DC-DC converters connected in parallel, each of the DC-DC converters including a switching device performing ON-OFF operation. The control method comprises: detecting output current of each of the DC-DC converters by a current detection unit connected at a stage subsequent to a connection point to which an output end of each of the DC-DC converters is connected; controlling by a control unit the switching device of each of the DC-DC converters so as to turn on the switching device at a different timing; and adjusting by an adjustment unit an ON time period of the switching device upon ON-OFF operation based on the detected output current of each of the DC-DC converters in a case where control is performed by the control unit.

A control method for a multi-phase DC-DC converter according to the present disclosure is a control method for a multi-phase DC-DC converter including a plurality of DC-DC converters connected in parallel, each of the DC-DC converters including a switching device performing ON-OFF operation. The control method comprises: detecting output current of each of the DC-DC converters by a current detection unit connected at a stage subsequent to a connection point to which an output end of each of the DC-DC converters is connected; controlling by a control unit ON-OFF of the switching device by changing a duty ratio of the switching device of each of the DC-DC converters to a predetermined value at a different timing for a required time period; and adjusting by an adjustment unit an ON time period of the switching device upon ON-OFF operation based on the detected output current of each of the DC-DC converters in a case where control is performed by the control unit.

### [Brief Description of Drawings]

FIG. 1 is an illustrative view illustrating one example of the configuration of a multi-phase DC-DC converter of Embodiment 1.
FIG. 2 is a schematic view illustrating waveform examples of the components at a normal operation of the multi-phase DC-DC converter of Embodiment 1.
FIG. 3 is a schematic view illustrating waveform examples of the components upon adjustment by the multi-phase DC-DC converter of Embodiment 1.
FIG. 4 is an illustrative view illustrating one example of the adjustment of an ON time period by the multi-phase DC-DC converter of Embodiment 1.
FIG. 5 is a schematic view illustrating current waveform examples in the case where a resistance difference in implementation of a two-phase DC-DC converter is 1 mΩ.
FIG. 6 is a schematic view illustrating current waveform examples in the case where a resistance difference in implementation of a two-phase DC-DC converter is 10 mΩ.
FIG. 7 is a schematic view illustrating current waveform examples after adjustment by the multi-phase DC-DC converter of Embodiment 1.
FIG. 8 is an illustrative view illustrating one example of the configuration of a multi-phase DC-DC converter of Embodiment 2.
FIG. 9 is a flowchart illustrating one example of a processing procedure of the control by the multi-phase DC-DC converter according to the present embodiments.
FIG. 10 is a schematic view illustrating one example of changes of duty ratios of the switching devices upon adjustment by a multi-phase DC-DC converter of Embodiment 3.
FIG. 11 is a schematic view illustrating one example of output current detected by a current detection unit upon adjustment by the multi-phase DC-DC converter of Embodiment 3.
FIG. 12 is a schematic view illustrating one example of output current in each of the phases upon adjustment by the multi-phase DC-DC converter of Embodiment 3.
FIG.13 is a flowchart illustrating one example of the processing procedure of the control by the multi-phase DC-DC converter of Embodiment 3.
FIG. 14 is an illustrative view illustrating one example of the configuration of a multi-phase DC-DC converter of Embodiment 4.

### [Modes for Carrying out Invention]

### [Problems to be Solved by Disclosure]

In a conventional multi-phase DC-DC converter as described in Patent Document 1, however, a current sensor for detecting current of a DC-DC converter for each phase is needed. Thus, increase in the number of phases leads to increase in the number of current sensors, resulting in a problem of increase in cost.

Hence, an object is to provide a multi-phase DC-DC converter capable of balancing current between the phases at a low cost, a computer program for controlling the multi-phase DC-DC converter and a control method for the multi-phase DC-DC converter.

### [Effects of Disclosure]

According to the present disclosure, it is possible to balance current between the phases at a low cost.

### [Description of Embodiments of the Invention]

The multi-phase DC-DC converter according to the present embodiment is a multi-phase DC-DC converter including a plurality of DC-DC converters connected in parallel, each of the DC-DC converters including a switching device performing ON-OFF operation. The multi-phase DC-DC converter comprises: a current detection unit that is connected at a stage subsequent to a connection point to which an output end of each of the DC-DC converters is connected, and that detects output current of each of the DC-DC converters; a control unit that controls the switching device of each of the DC-DC converters so as to turn on the switching device at a different timing; and an adjustment unit that adjusts an ON time period of the switching device upon ON-OFF operation based on the output current of each of the DC-DC converters detected by the current detection unit in a case where control is performed by the control unit.

The computer program according to the present embodiment is a computer program causing a computer to control a multi-phase DC-DC converter including a plurality of DC-DC converters connected in parallel, each of the DC-DC converters including a switching device performing ON-OFF operation. The computer program causes the computer to function as: a current obtainment unit that obtains output current of each of the DC-DC converters from a current detection unit connected at a stage subsequent to a connection point to which an output end of each of the DC-DC converters is connected; a control unit that controls the switching device of each of the DC-DC converters so as to turn on the switching device at a different timing; and an adjustment unit that adjusts an ON time period of the switching device upon ON-OFF operation based on the obtained output current of each of the DC-DC converters in a case where control is performed by the control unit.

The control method for a multi-phase DC-DC converter according to the present embodiment is a control method for a multi-phase DC-DC converter including a plurality of DC-DC converters connected in parallel, each of the DC-DC converters including a switching device performing ON-OFF operation. The control method comprises: detecting output current of each of the DC-DC converters by a current detection unit connected at a stage subsequent to a connection point to which an output end of each of the DC-DC converters is connected; controlling by a control unit the switching device of each of the DC-DC converters so as to turn on the switching device at a different timing; and adjusting by an adjustment unit an ON time period of the switching device upon ON-OFF operation based on the detected output current of each of the DC-DC converters in a case where control is performed by the control unit.

The current detection unit is connected at a stage subsequent to a connection point to which an output end of each of the DC-DC converters is connected. The current detection unit detects output current of each of the DC-DC converters. The current detection unit may be formed by, for example, a shunt resistor.

The control unit controls the switching device of each of the DC-DC converters so as to turn on the switching device at a different timing. In the case of a two-phase DC-DC converter including two DC-DC converters, the control unit turns on the switching device of the DC-DC converter in the first phase at a time point t1 and turns it off at a time point t2 which is after the time point t1. The control unit then turns on the switching device of the DC-DC converter in the second phase at a time point t4 which is after the time point t2 and turns it off at a time point t5 which is after the time point t4.

The adjustment unit adjusts an ON time period of the switching device upon ON-OFF operation based on the output current of each of the DC-DC converters detected by the current detection unit in the case where the switching device is controlled so as to be turned on by the control unit.

For example, in the case of the two phase DC-DC converter, the output current detected by the current detection unit when the switching device of the DC-DC converter in the first phase is turned on is regarded as I1, and the output current detected by the current detection unit when the switching device of the DC-DC converter in the second phase is turned on is regarded as I2 (<I1). In this case, since the resistance component in implementation of the DC-DC converter in the first phase is smaller than that of the DC-DC converter in the second phase, the output current I1 is considered to be larger than the output current 12.

In the above-described case, the adjustment unit shortens the ON time period of the switching device of the DC-DC converter in the first phase to reduce the output current, and extends the ON time period of the switching device of the DC-DC converter in the second phase to increase the output current. That is, there is no need to provide a current sensor for each DC-DC converter in each phase, so that balancing of current between the phases can be achieved at a low price.

In the multi-phase DC-DC converter according to the present embodiment, the control unit controls the switching device so as to turn on the switching device at a different timing when the multi-phase DC-DC converter starts to operate.

The control unit controls each of the switching devices so as to turn on the switching device at a different timing when the multi-phase DC-DC converter starts to operate. Since the ON time period of each of the switching devices is adjusted every time the multi-phase DC-DC converter starts to operate, balancing of the current between the phases can be achieved even if the resistance component in implementation of the DC-DC converters in the phases are changed over time.

In the multi-phase DC-DC converter according to the present embodiment, the control unit, in a case of controlling the switching device of one of the DC-DC converters so as to turn on the switching device, controls the switching device of another one of the DC-DC converters so as to turn on the switching device after the output current of the one of the DC-DC converters detected by the current detection unit is reduced to zero.

The control unit, in the case of controlling the switching device of one of the DC-DC converters so as to turn on the switching device, controls the switching device of another one of the DC-DC converters so as to turn on the switching device after output current of the one of the DC-DC converters detected by the current detection unit is reduced to zero. Thus, in the case where the current of the DC-DC converter in one phase is detected, it is not influenced by the output current of the DC-DC converter in another phase, so that the output current of the DC-DC converters in the phases can independently be detected with accuracy, and the degree of an imbalance in current between the phases can be grasped.

In the multi-phase DC-DC converter according to the present embodiment, the control unit controls the switching device so as to repeatedly turn on the switching device at different timings for a predetermined detection time period, and the multi-phase DC-DC converter further comprises a statistic calculation unit that calculates a statistic based on the output current of each of the DC-DC converters repeatedly detected by the current detection unit, and the adjustment unit adjusts the ON time period of the switching device based on the statistic calculated by the statistic calculation unit.

The control unit controls each of the switching devices so as to repeatedly turn on the switching device at different timings for a predetermined detection time period. The predetermined detection time can be set such that the number of times of turning on of each of the switching devices corresponds to about several times (on the order of twice to five times, for example). Note that the number of times of turning on is not limited to two to five times.

The statistic calculation unit calculates a statistic based on the output current of each of the DC-DC converters repeatedly detected by the current detection unit. The statistic may be, for example, an average value or a median value. The adjustment unit adjusts the ON time period of the switching device based on the statistic calculated by the statistic calculation unit. Even if there are, for example, errors in the detected output current due to noise or the like, the statistics of the output current detected multiple times are used to thereby evaluate the output current of each of the DC-DC converters with high accuracy.

In the multi-phase DC-DC converter according to the present embodiment, the current detection unit detects the output current of each of the DC-DC converters at a time point after a predetermined time elapses from a time point when the switching device is turned on.

The current detection unit detects the output current of each of the DC-DC converters at a time point after a predetermined time elapses from a time point when the switching device is turned on. The predetermined time can be regarded as a required time point from the time point when each of the switching devices is turned on to immediately before it is turned off. The time point after a predetermined time elapses may be, for example, a time point immediately before the switching device is turned off, a time point in the middle of the ON time period, or the like. The time points when the output current of the DC-DC converters are detected are made equal, so that the conditions for detecting output current can be equalized, and the degree of imbalance of the current between the phases can accurately be grasped.

A multi-phase DC-DC converter according to the present embodiment is a multi-phase DC-DC converter including a plurality of DC-DC converters connected in parallel, each of the DC-DC converters including a switching device performing ON-OFF operation. The multiphase DC-DC converter comprises: a current detection unit that is connected at a stage subsequent to a connection point to which an output end of each of the DC-DC converters is connected, and that detects output current of each of the DC-DC converters; a control unit that controls ON-OFF of the switching device by changing a duty ratio of the switching device of each of the DC-DC converters to a predetermined value at a different timing for a required time period; and an adjustment unit that adjusts an ON time period of the switching device upon ON-OFF operation based on the output current of each of the DC-DC converters detected by the current detection unit in a case where control is performed by the control unit.

A computer program according to the present embodiment is a computer program causing a computer to control a multi-phase DC-DC converter including a plurality of DC-DC converters connected in parallel, each of the DC-DC converters including a switching device performing ON-OFF operation. The computer program causes the computer to function as: a current obtainment unit that obtains output current of each of the DC-DC converters from a current detection unit connected at a stage subsequent to a connection point to which an output end of each of the DC-DC converters is connected; a control unit that controls ON-OFF of the switching device by changing a duty ratio of the switching device of each of the DC-DC converters to a predetermined value at a different timing for a required time period; and an adjustment unit that adjusts an ON time period of the switching device upon ON-OFF operation based on the obtained output current of each of the DC-DC converters in a case where control is performed by the control unit.

A control method for a multi-phase DC-DC converter according to the present embodiment is a control method for a multi-phase DC-DC converter including a plurality of DC-DC converters connected in parallel, each of the DC-DC converters including a switching device performing ON-OFF operation. The control method comprises: detecting output current of each of the DC-DC converters by a current detection unit connected at a stage subsequent to a connection point to which an output end of each of the DC-DC converters is connected; controlling by a control unit ON-OFF of the switching device by changing a duty ratio of the switching device of each of the DC-DC converters to a predetermined value at a different timing for a required time period; and adjusting by an adjustment unit an ON time period of the switching device upon ON-OFF operation based on the detected output current of each of the DC-DC converters in a case where control is performed by the control unit.

The current detection unit is connected at a stage subsequent to a connection point to which an output end of each of the DC-DC converters is connected. The current detection unit detects output current of each of the DC-DC converters. The current detection unit can be formed by, for example, a shunt resistor.

The control unit controls ON-OFF of the switching device by changing a duty ratio of the switching device of each of the DC-DC converters to a predetermined value at a different timing for a required time period. For example, in the case of a two phase DC-DC converter including two DC-DC converters, the control unit increases the duty ratio of the switching device of the DC-DC converter in the first phase by ΔD from the duty ratio D at a time point t11, and controls the ON-OFF of the switching device of the DC-DC converter in the first phase at a duty ratio (D+ΔD). The control unit then increases the duty ratio of the switching device of the DC-DC converter in the second phase by ΔD from the duty ratio D at a time point t12, and controls the ON-OFF of the switching device of the DC-DC converter in the second phase at a duty ratio (D+ΔD). The time from the time point t11 to the time point t12 may be a time required for detecting the output current of the multi-phase DC-DC converter, for example.

The adjustment unit adjusts an ON time period of the switching device upon ON-OFF operation based on the output current of each of the DC-DC converters detected by the current detection unit in a case where control is performed by the control unit.

In the case of the two phase DC-DC converter, for example, the output current detected by the current detection unit if the duty ratio of the switching device of the DC-DC converter in the first phase is changed is regarded as output current I11 whereas the output current detected by the current detection unit if the duty ratio of the switching device of the DC-DC converter in the second phase is changed is regarded as output current 112 (<I11). In this case, since the resistance component in implementation of the DC-DC converter in the first phase is smaller than that of the DC-DC converter in the second phase, the output current I11 is considered to be larger than the output current 112.

In the above-mentioned case, the adjustment unit shortens the ON time period of the switching device of the DC-DC converter in the first phase to reduce the output current of the DC-DC converter in the first phase, and extends the ON time period of the switching device of the DC-DC converter in the second phase to thereby increase the output current of the DC-DC converter in the second phase. That is, there is no need to provide a current sensor for each DC-DC converter in each phase, so that balancing of current between the phases can be achieved at a low price. It is noted that the output current of the multi-phase DC-DC converter as a whole can be made unchanged.

In the multi-phase DC-DC converter according to the present embodiment, the control unit controls ON-OFF of the switching device by changing a duty ratio of the switching device of each of the DC-DC converters to a predetermined value for a required time period in a case where the output current detected by the current detection unit varies.

The control unit controls ON-OFF of the switching device by changing a duty ratio of the switching device of each of the DC-DC converters to a predetermined value for a required time period in a case where the output current detected by the current detection unit varies. The variation in the output current may corresponds to a case where the output current is above a required range or a case where it is below the required range, for example.

When the output current of the multi-phase DC-DC converter as a whole varies due to a load variation, etc., the characteristics of the switching device of each of the DC-DC converters may also be changed, and the output current of each of the DC-DC converters may also be changed and unbalanced. Hence, in the case where the output current of the multi-phase DC-DC converter as a whole varies, ON-OFF of the switching devices can be controlled by changing the duty ratios of the switching devices of the respective DC-DC converters to predetermined values at different timings for a predetermined time period, and variations of the output current of the DC-DC converters can be corrected by comparing the output current of the DC-DC converters, which allows for balancing of current between the respective phases.

In the multi-phase DC-DC converter according to the present embodiment, the adjustment unit, in a case where the output current of one of the DC-DC converters detected by the current detection unit is larger than the output current of another one of the DC-DC converters detected by the current detection unit, makes the ON time period of the switching device of the one of the DC-DC converters shorter than the ON time period of the switching device of the above-described another one of the DC-DC converters.

The adjustment unit, in a case where the output current of one of the DC-DC converters detected by the current detection unit is larger than the output current of another one of the DC-DC converters detected by the current detection unit, makes an ON time period of the switching device of the one of the DC-DC converters shorter than an ON time period of the switching device of this another one of the DC-DC converters.

In the two phase DC-DC converter, for example, the output current detected by the current detection unit when the switching device of the DC-DC converter in the first phase is turned on is assumed as I1, and the output current detected by the current detection unit when the switching device of the DC-DC converter in the second phase is turned on is assumed as I2 (<I1). The adjustment unit shortens the ON time period of the DC-DC converter in the first phase to thereby reduce the output current, and extends the ON time period of the switching device of the DC-DC converter in the second phase to thereby increase the output current. This makes it possible to balance the output current between the DC-DC converters in the respective phases.

The multi-phase DC-DC converter according to the present embodiment further comprises an obtainment unit that obtains a control signal concerning a required duty ratio, and the adjustment unit adjusts the ON time period of the switching device such that a sum of duty ratios of the switching devices is the required duty ratio.

The obtainment unit obtains a control signal concerning a required duty ratio. The required duty ratio can be assumed as a duty ratio of the multi-phase DC-DC converter as a whole. In the two-phase DC-DC converter, for example, assuming that a required duty ratio is 100%, the duty ratio 100% is divided by the two DC-DC converters, so that each DC-DC converter operates at a duty ratio of 50%.

The adjustment unit adjusts the ON time period of the switching devices such that the sum of the duty ratios of the switching devices is the required duty ratio. Assuming that the required duty ratio is, for example, 2D, the duty ratio of each DC-DC converter is D. It is assumed that the output current of the DC-DC converter in the first phase is I1, and the output current of the DC-DC converter in the second phase is I2 (<I1). In this case, the adjustment unit adjusts the ON time period of the switching device such that the duty ratio D1 of the DC-DC converter in the first phase satisfies an equation D1= D(1-α), and adjusts the ON time period of the switching device such that the duty ratio D2 of the DC-DC converter in the second phase satisfies an equation D2=D(1+α). Here, α can be represented by an equation α=k • (11/12), where k is a conversion factor for converting a current difference into a duty ratio. The value of k can appropriately be set.

The duty ratio of each of the DC-DC converters can be adjusted based on the detected output current of each of the DC-DC converters, and the duty ratio of the multi-phase DC-DC converter as a whole can be maintained.

### [Detailed Description of the Invention]

### Embodiment 1

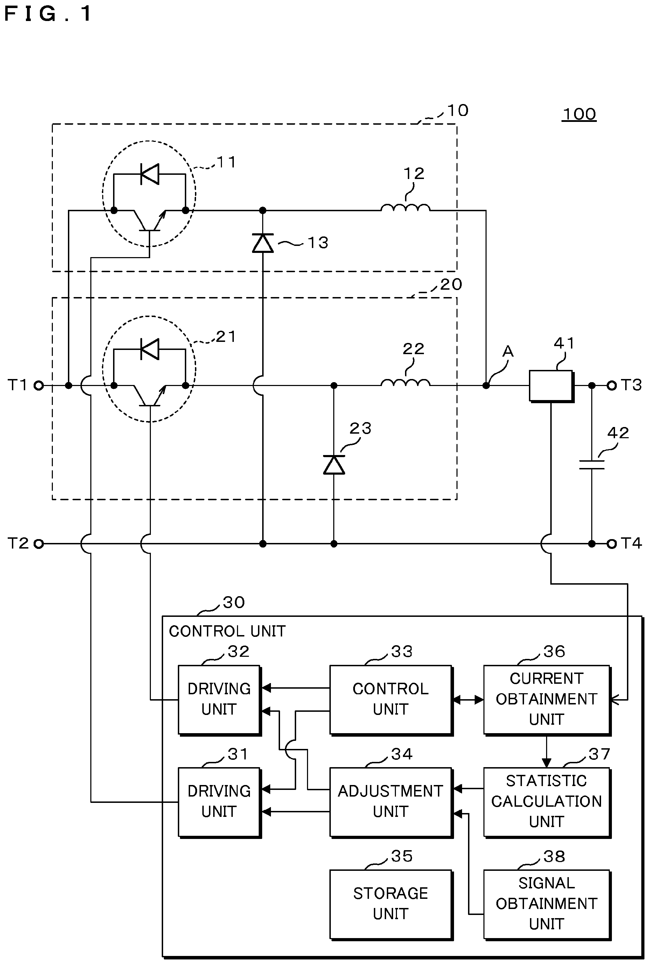

The present invention will be described below with reference to the drawings depicting embodiments. FIG. 1 is an illustrative view illustrating one example of the configuration of a multi-phase DC-DC converter 100 of Embodiment 1. The multi-phase DC-DC converter 100 of Embodiment 1 is a so-called buck multi-phase DC-DC converter. In the present embodiment, a two-phase DC-DC converter is described as an example though not limited to the two-phase DC-DC converter, but a converter with three or more phases may be used. The multi-phase DC-DC converter 100 includes input terminals T1 and T2 and output terminals T3 and T4, and transforms the input voltage applied to the input terminals T1 and T2 by stepping down and outputs the transformed voltage from the output terminals T3 and T4. The input terminal T2 is connected to the output terminal T4.

To each of the input terminals T1 and T2, a predetermined battery may be connected or direct current (DC) voltage obtained by rectifying alternate current (AC) voltage may be applied. To each of the output terminals T3 and T4, a predetermined battery, an electric load and so on can be connected.

The multi-phase DC-DC converter 100 includes a DC-DC converter 10 in the first phase and a DC-DC converter 20 in the second phase that are connected in parallel. The DC-DC converter 10 in the first phase includes a switching device 11 performing ON/OFF operation whereas the DC-DC converter 20 in the second phase includes a switching device 21 performing ON/OFF operation.

The following description will be made regarding the switching devices 11 and 21 as insulated gate bipolar transistors (hereinafter, referred to as IGBTs). The switching devices 11 and 21 may be devices such as metal oxide semiconductor field effect transistors (hereinafter referred to as MOSFETs) or the like, not limited to the IGBTs. The switching devices 11 and 21 each include a diode connected in antiparallel between the collector and the emitter thereof.

The DC-DC converter 10 includes an inductor 12, a diode 13, and so on other than the switching device 11. More specifically, the collector of the switching device 11 is connected to the input terminal T1 whereas the emitter thereof is connected to the cathode of the diode 13 and one end of the inductor 12. The anode of the diode 13 is connected to the input terminal T2. To the base of the switching device 11, a driving signal is input from a driving unit 31, which will be described later.

The DC-DC converter 20 includes an inductor 22, a diode 23, and so on other than the switching device 21. More specifically, the collector of the switching device 21 is connected to the input terminal T1 whereas the emitter thereof is connected to the cathode of the diode 23 and one end of the inductor 22. The anode of the diode 23 is connected to the input terminal T2. To the base of the switching device 21, a driving signal is input from a driving unit 32, which will be described later.

The other ends of the inductors 12 and 22 are connected to each other at a connection point (denoted by a reference code A). That is, the input ends of the DC-DC converters 10 and 20 are connected to the input terminal T1 whereas the output ends thereof are connected to the connection point A.

At a stage subsequent to the connection point A, a current detection unit 41 is connected. That is, the current detection unit 41 is connected between the connection point A and the output terminal T3. The current detection unit 41 can be formed by, for example, a shunt resistor or the like, although not limited to a shunt resistor. A smoothing capacitor 42 is connected across the output terminals T3 and T4.

A control device 30 includes the driving units 31 and 32, a control unit 33, an adjustment unit 34, a storage unit 35 for storing information required for processing within the control device 30, information obtained as a result of the processing, and the like, a current obtainment unit 36, a statistic calculation unit 37, a signal obtainment unit 38 and so on.

The current obtainment unit 36 obtains a current value (voltage value in practice) detected by the current detection unit 41 and outputs the obtained current value to the control unit 33 and the statistic calculation unit 37.

The driving unit 31 outputs a driving signal of a required duty ratio to the base of the switching device 11 based on an instruction from the adjustment unit 34. This causes the switching device 11 to perform ON/OFF operation at a required duty ratio.

The driving unit 32 outputs a driving signal of a required duty ratio to the base of the switching device 21 based on an instruction from the adjustment unit 34. This causes the switching device 21 to perform ON/OFF operation at a required duty ratio.

In FIG. 1, when the switching device 11 of the DC-DC converter 10 is turned on, current from the input terminal T1 flows through the switching device 11 to the inductor 12 and is output from the output terminal T3. By the current, energy is accumulated in the inductor 12. When the switching device 11 is then turned off, by the energy accumulated in the inductor 12, current circulates through the diode 13 and is output from the output terminal T3. The operation of the DC-DC converter 20 is also similar to that of the DC-DC converter 10.

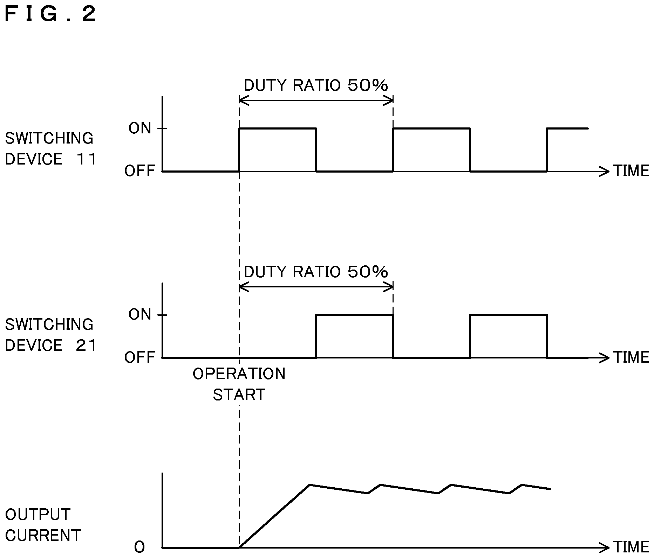

FIG. 2 is a schematic view illustrating example waveforms of the components at a normal operation of the multi-phase DC-DC converter 100 of Embodiment 1. In FIG. 2, the chart at the top depicts ON-OFF states of the switching device 11, the chart at the middle depicts ON-OFF states of the switching device 21, and the chart at the bottom schematically depicts output current of the multi-phase DC-DC converter 100. In the example in FIG. 2, the duty ratio D of each of the DC-DC converters is assumed as 50%. That is, the duty ratio of the multi-phase DC-DC converter 100 as a whole is 100%. Assuming that the duty ratio of the multi-phase DC-DC converter 100 as a whole is 50%, the duty ratio of each DC-DC converter is 25%.

The multi-phase DC-DC converter 100 of Embodiment 1 adjusts the duty ratios D (that is, the ON time periods of the switching devices 11 and 21 of the respective DC-DC converters 10 and 20) of the respective DC-DC converters 10 and 20 in order to reduce an imbalance between the phases before starting the normal operation as illustrated in FIG. 2. Adjustment of the ON time periods of the switching devices 11 and 21 will be described in detail below.

The control unit 33 controls the switching devices 11 and 21 of the respective DC-DC converters 10 and 20 so as to turn them on at different timings.

More specifically, the driving unit 31 outputs to the base of the switching device 11 a required driving signal based on an instruction from the control unit 33 whereas the driving unit 32 outputs to the base of the switching device 21 a required driving signal based on an instruction from the control unit 33.

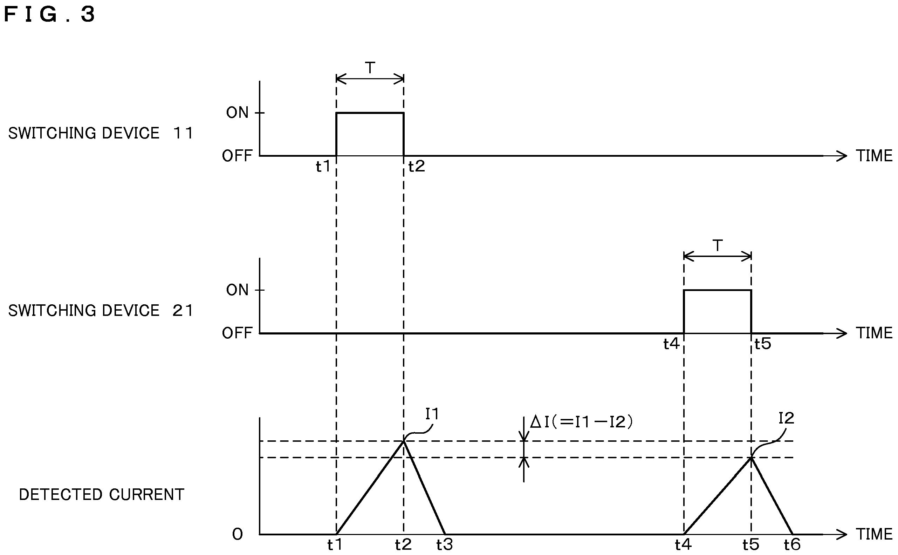

FIG. 3 is a schematic view illustrating example waveforms of the components upon adjustment by the multi-phase DC-DC converter 100 of Embodiment 1. In FIG. 3, the chart at the top depicts ON-OFF states of the switching device 11, the chart at the middle depicts ON-OFF states of the switching device 21, and the chart at the bottom schematically depicts the output current detected by the current detection unit 41.

In the example in FIG. 3, the control unit 33 turns on the switching device 11 of the DC-DC converter 10 at a time point t1 and turns it off at a time point t2 after the time point t1. The time period from the time point t1 to the time point t2 is assumed as T. The time T is an ON time period based on the duty ratio D of the DC-DC converter 10, for example. The control unit 33 further turns on the switching device 21 of the DC-DC converter 20 at a time point t4 after the time point t2 and turns it off at a time point t5 after the time point t4. The time period from the time point t4 to the time point t5 is assumed as T.

As illustrated in FIG. 3, when the switching device 11 of the DC-DC converter 10 is turned on at the time point t1, the current flowing through the current detection unit 41 increases after the time point t1. When the switching device 11 is turned off at the time point t2, the current flowing through the current detection unit 41 decreases after the time point t2 and is reduced to zero at the time point t3. The current detected by the current detection unit 41 immediately prior to the time point t2, that is, immediately before the switching device 11 is turned off is assumed as I1.

Furthermore, as illustrated in FIG. 3, when the switching device 21 of the DC-DC converter 20 is turned on at the time point t4, the current flowing through the current detection unit 41 increases after the time point t4. When the switching device 21 is turned off at the time point t5, the current flowing through the current detection unit 41 decreases after the time point t5 and is reduced to zero at a time point t6. The current detected by the current detection unit 41 immediately prior to the time point t5, that is, immediately before the switching device 21 is turned off is assumed as I2 (<I1). In FIG. 3, for the sake of easy understanding, a current difference Δ I (=11-12) is illustrated in an enlarged manner though the difference is actually much smaller.

In the case illustrated in FIG. 3, since the resistance component in implementation of the DC-DC converter 10 is smaller than that of the DC-DC converter 20, even if the switching devices 11 and 21 are turned on over an equal time T period (that is, at the same duty ratio), the output current I1 of the DC-DC converter 10 is considered to be larger than the output current I2 of the DC-DC converter 20.

If the control unit 33 controls the switching devices 11 and 21 so as to turn them on, the adjustment unit 34 adjusts the ON time periods of the switching devices 11 and 21 upon the normal operation based on the output current of the DC-DC converters 10 and 20 detected by the current detection unit 41.

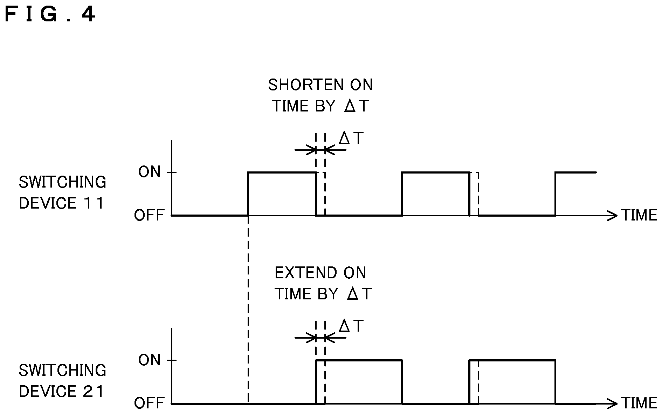

FIG. 4 is an illustrative view illustrating one example of the adjustment of an ON time period by the multi-phase DC-DC converter 100 of Embodiment 1. In FIG. 4, the chart at the top depicts adjusted ON-OFF states of the switching device 11, and the chart at the bottom depicts adjusted ON-OFF states of the switching device 21. As illustrated in FIG.4, the adjustment unit 34 shortens the ON time period of the switching device 11 of the DC-DC converter 10 (shortens it by ΔT in the example in FIG. 4) to thereby reduce the output current, and extends the ON time period of the switching device 21 of the DC-DC converter 20 (extends it by ΔT in the example in FIG. 4) to thereby increase the output current.

Namely, if the output current of the DC-DC converter 10 detected by the current detection unit 41 is larger than that of the DC-DC converter 20 detected by the current detection unit 41, the adjustment unit 34 makes the ON time period of the switching device 11 of the DC-DC converter 10 shorter than the ON time period of the switching device 21 of the DC-DC converter 20.

The above-described configuration eliminates the need for providing a current sensor for each DC-DC converter in each phase, and a single current detection unit common to the DC-DC converters in the phases is only required to be provided, so that balancing of current between the phases can be achieved at a low price.

In addition, the signal obtainment unit 38 functions as an obtainment unit and obtains a control signal concerning a required duty ratio. The required duty ratio can be regarded as the duty ratio of the multi-phase DC-DC converter 100 as a whole. In the two-phase DC-DC converter as described in the present embodiment, for example, assuming that the required duty ratio is 100%, the duty ratio 100% is divided by the two DC-DC converters 10 and 20, so that each DC-DC converter operates at a duty ratio of 50%.

The adjustment unit 34 adjusts the ON time periods of the respective switching devices 11 and 21 such that the sum of the duty ratios of the respective switching devices 11 and 21 is equal to a required duty ratio.

Assuming that the required duty ratio is, for example, 2D, the duty ratio of each DC-DC converter 10 or 20 is D. The output current of the DC-DC converter 10 is assumed as I1 whereas the output current of the DC-DC converter 20 is assumed as I2 (<I1).

In this case, the adjustment unit 34 adjusts the ON time period of the switching device 11 such that the duty ratio D1 of the DC-DC converter 10 satisfies an equation D1= D (1-α). Furthermore, the adjustment unit 34 adjusts the ON time period of the switching device 21 such that the duty ratio D2 of the DC-DC converter 20 satisfies an equation D2= D (1+α). Here, α can be represented by an equation α=k • 11/12, where k is a conversion factor for converting a current difference into a duty ratio. The value k can appropriately be set.

The respective duty ratios D of the DC-DC converters 10 and 20 before adjustment of the ON time period are assumed as 50%, for example. Assuming that the duty ratio D1 of the DC-DC converter 10 after adjustment of the ON time period is 45%, by setting the duty ratio D2 of the DC-DC converters 20 to 55%, the duty ratio of the multi-phase DC-DC converter 100 as a whole is 100%.

From the above-described configuration, the duty ratios of the respective DC-DC converters 10 and 20 can be adjusted based on the detected output current of the respective DC-DC converters 10 and 20, and the duty ratio of the multi-phase DC-DC converter 100 as a whole can be maintained.

Note that the adjustment of the ON time periods of the switching devices 11 and 21 (that is, adjustment of the duty ratios) is not limited to the above-described example. Another example of the adjustment of the duty ratios will be described below.

The number of phases of the multi-phase DC-DC converter 100 is regarded as N. It is assumed that the current (current in the first phase) of the DC-DC converter in the first phase detected by the current detection unit 41 is I1, the current (current in the second phase) of the DC-DC converter in the second phase detected by the current detection unit 41 is I2, the current (current in the K-th phase) of the DC-DC converter in the K-th pase is Ik, the current (current in the N-th phase) of the DC-DC converter in the N-th phase is In, and so forth. The average of the current for each phase is regarded as reference current Ir. The reference current Ir can be represented by an equation Ir={(I1+I2+...In)/N}. The duty ratio of the DC-DC converter in each phase before adjustment is regarded as D. Accordingly, the duty ratio of the multi-phase DC-DC converter 100 as a whole is (N×D).

In this case, the duty ratio Dk of the DC-DC converter in the K-th phase after adjustment can be represented by an equation Dk=D+{(Ir-Ik)×p}, where p is a predetermined coefficient. If the current Ik of the DC-DC converter in the K-th phase is smaller than the reference current Ir, the duty ratio Dk after adjustment of the DC-DC converter in the K-th phase is larger than the duty ratio D before adjustment. In contrast, if the current Ik of the DC-DC converter in the K-th phase is larger than the reference current Ir, the duty ratio Dk after adjustment of the DC-DC converter in the K-th phase is smaller than the duty ratio D before adjustment.

The control unit 33 can control the switching devices 11 and 21 so as to turn them on at predetermined adjustment timings different from each other (for example, immediately after the start of the multi-phase DC-DC converter 100, and at a start of operation such as a software starting time).

Every time the multi-phase DC-DC converter 100 starts to operate, the ON-time periods of the switching devices 11 and 21 can be adjusted. Thus, even if the resistance component in implementation of the DC-DC converters 10 and 20 in the respective phases change over time, for example, balancing of the current between the phases can be achieved.

Moreover, if the control unit 33 controls the switching device 11 of the DC-DC converter 10 so as to turn it on, it can control the switching device 21 of the DC-DC converter 20 so as to turn it on after the output current of the DC-DC converter 10 detected by the current detection unit 41 is reduced to zero. In the example of FIG. 3, the output current of the DC-DC converter 10 is zero after the time point t3.

Thus, any detected output current of the DC-DC converter in one phase is not affected by the output current of the DC-DC converter in another phase, so that the output current of the DC-DC converters in the respective phases can independently be detected with accuracy, and the degree of an imbalance in current between the phases, for example, can be grasped.

The current detection unit 41 detects the output current of each of the DC-DC converters 10 and 20 at a time point after a predetermined time elapses from the time point when each of the switching devices 11 and 21 is turned on. That is, the control unit 33 can output an instruction to the current obtainment unit 36 such that current is detected by the current detection unit 41 at a time point after a predetermined time elapses from a time point when each of the switching devices 11 and 21 is turned on.

In the example in FIG. 3, the output current of the DC-DC converters are respectively detected at the time point t2 immediately before the switching device 11 is OFF and the time point t5 immediately before the switching device 21 is OFF. Note that the predetermined time can be regarded as a required time point from when each of the switching devices is turned on to immediately before it is turned off. That is, the time point after a predetermined time elapses may be the time point in the middle of the ON time period without being limited to the time point immediately before each of the switching devices is turned off.

The time point when the output current of each of the DC-DC converters is detected is made equal, whereby the condition for detecting output current can be equalized, and the degree of imbalance of the current between the respective phases can accurately be grasped.

In the example in FIG. 3, output current of each of the DC-DC converters is configured to be detected only once while the number of times of detection is not limited to once. That is, the control unit 33 can control the switching devices 11 and 21 so as to repeatedly turn them on at different timings over a predetermined detection time. The predetermined detection time can be set such that the number of times of turning on of each of the switching devices 11 and 21 is about several times (on the order of twice to five times, for example). Note that the number of times of turning on is not limited to two to five times.

The statistic calculation unit 37 calculates a statistic based on the output current of each of the DC-DC converters 10 and 20 repeatedly detected by the current detection unit 41. The statistic may be, for example, an average value or a median value. In the case where the current detected by the current detection unit 41 when the switching device 11 is repeatedly turned on are 111, 112, I13,... I1n, the average value can be evaluated by the expression (I11+I12+I13+...+I1n)/n. In the case where the current detected by the current detection unit 41 when the switching device 21 is repeatedly turned on are I21, I22, I23,... I2n, the average value can be evaluated by the expression (I21+I22+I23+...+I2n)/n.

The adjustment unit 34 adjusts the ON time period of each of the switching devices 11 and 21 based on the statistic calculated by the statistic calculation unit 37. For example, even if there are errors in the detected output current due to noise or the like, the statistic of the output current detected multiple times is used to thereby evaluate the output current of each of the DC-DC converters with high accuracy.

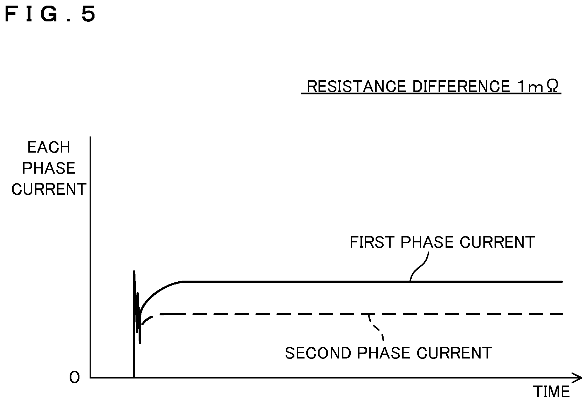

FIG. 5 is a schematic view illustrating current waveform examples in the case where a resistance difference in implementation of a two-phase DC-DC converter is 1 mΩ. That is, the example illustrated in FIG. 5 depicts a result of simulated output current of the DC-DC converters when the resistance difference in implementation is 1 mΩ as a comparison example where a current imbalance occurs. In FIG. 5, a solid line depicts the current waveform of the DC-DC converter in the first phase whereas a dashed line depicts the current waveform of the DC-DC converter in the second phase. Here, since the waveform of the output current is not constant but includes ripple components, the peaks of the current values are plotted for the sake of simplicity. As can be understood from FIG. 5, a current imbalance causes the loss of electric components including the switching devices, or the bias or enhance of a temperature rise or the like.

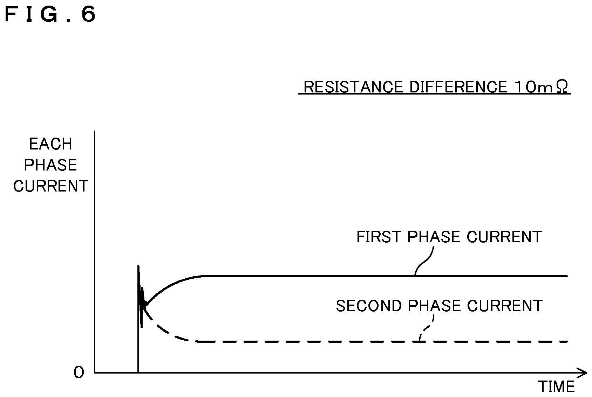

FIG. 6 is a schematic view illustrating current waveform examples in the case where a resistance difference in implementation of a two-phase DC-DC converter is 10 mΩ. That is, the example illustrated in FIG. 6 depicts a result of simulated output current of the DC-DC converters when the resistance difference in implementation is 10 mΩ as a comparison example where a current imbalance occurs. In FIG. 6, a solid line depicts the current waveform of the DC-DC converter in the first phase whereas a dashed line depicts the current waveform of the DC-DC converter in the second phase. Here, since the waveform of the output current is not constant but includes ripple components, the peaks of the current values are plotted for the sake of simplicity. As can be understood from FIG. 6, when the resistance difference further increases, the current imbalance further increases, which further enhances the loss of the electric components including the switching devices, the bias of a temperature rise or the like.

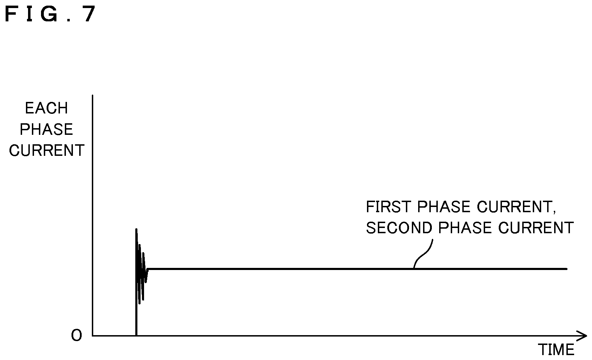

FIG. 7 is a schematic view illustrating current waveform examples after completion of the adjustment by the multi-phase DC-DC converter 100 of Embodiment 1. Here, since the waveform of the output current is not constant and includes ripple components, the peaks of the current values are plotted for the sake of simplicity. As can be understood from FIG. 7, the current of the DC-DC converter 10 in the first phase and the current of the DC-DC converter 20 in the second phase are equalized, which shows that current in the respective phases are balanced. This makes it possible to reduce the loss of the electric components including the switching devices or prevent a temperature rise from occurring by lessening the loss of the electric components including the switching devices and the bias of a temperature rise.

### Embodiment 2

Embodiment 1 has described the buck multi-phase DC-DC converter. The type of the multi-phase DC-DC converter may be a boost multi-phase DC-DC converter, although not limited to the buck multi-phase DC-DC converter. Hence, the boost multi-phase DC-DC converter will be described below.

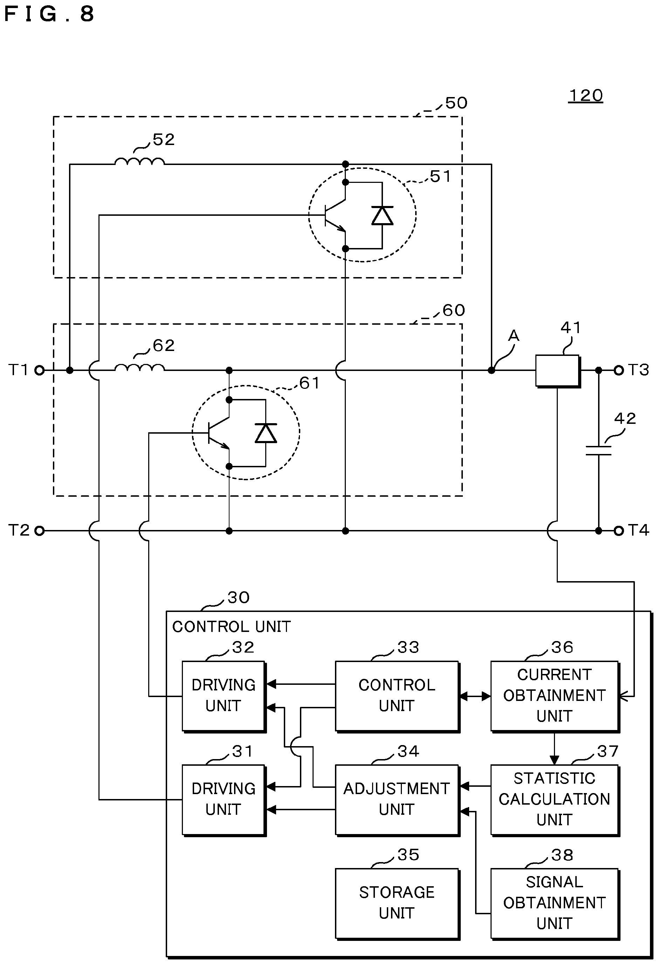

FIG. 8 is an illustrative view illustrating one example of the configuration of a multi-phase DC-DC converter 120 of Embodiment 2. The multi-phase DC-DC converter 120 of Embodiment 2 is a so-called boost multi-phase DC-DC converter. In the present embodiment, a two-phase DC-DC converter is described as an example though not limited to the two-phase DC-DC converter, but a converter with three or more phases may be used. The multi-phase DC-DC converter 120 includes input terminals T1 and T2 and output terminals T3 and T4, and transforms the input voltage applied to the input terminals T1 and T2 by stepping up and outputs the transformed voltage from the output terminals T3 and T4. The input terminal T2 is connected to the output terminal T4.

The multi-phase DC-DC converter 120 includes a DC-DC converter 50 in the first phase and a DC-DC converter 60 in the second phase that are connected in parallel. The DC-DC converter 50 in the first phase includes a switching device 51 performing ON/OFF operation whereas the DC-DC converter 60 in the second phase includes a switching device 61 performing ON/OFF operation.

The following description will be made regarding the switching devices 51 and 61 as insulated gate bipolar transistors (hereinafter, referred to as IGBTs). The switching devices 51 and 61 may be devices such as metal oxide semiconductor field effect transistors (hereinafter referred to as MOSFETs) or the like, although not limited to the IGBTs. The switching devices 51 and 61 each include a diode connected in antiparallel between the collector and the emitter thereof.

The DC-DC converter 50 includes an inductor 52 and so on other than the switching device 51. More specifically, one end of the inductor 52 is connected to the input terminal T1 whereas the other end thereof is connected to the collector of the switching device 51. The emitter of the switching device 51 is connected to the input terminal T2.

The DC-DC converter 60 includes an inductor 62 and so on other than the switching device 61. More specifically, one end of the inductor 62 is connected to the input terminal T1 whereas the other end thereof is connected to the collector of the switching device 61. The emitter of the switching device 61 is connected to the input terminal T2.

The other ends of the inductor 52 and 62 are connected to each other at a connection point (denoted by a reference code A). That is, the input ends of the DC-DC converters 50 and 60 are connected to the input terminal T1 whereas the output ends thereof are connected to the connection point A.

At a stage subsequent to the connection point A, a current detection unit 41 is connected. In other words, the current detection unit 41 is connected between the connection point A and the output terminal T3. The current detection unit 41 can be formed by, for example, a shunt resistor or the like, although not limited to a shunt resistor. A smoothing capacitor 42 is connected across the output terminals T3 and T4.

Since the configuration and operation of the control device 30 are similar to those described in Embodiment 1, the detailed description will not be made here. In the Embodiment 2 as well, similarly to Embodiment 1, there is no need to provide a current sensor for each DC-DC converter in each phase, and a single current detection unit common to the DC-DC converters in the phases is only required to be provided, so that balancing of current between the respective phases can be achieved at a low price. This further makes it possible to reduce the loss of the electric components including the switching devices or prevent a temperature rise from occurring by lessening the loss of the electric components including the switching devices and the bias of a temperature rise.

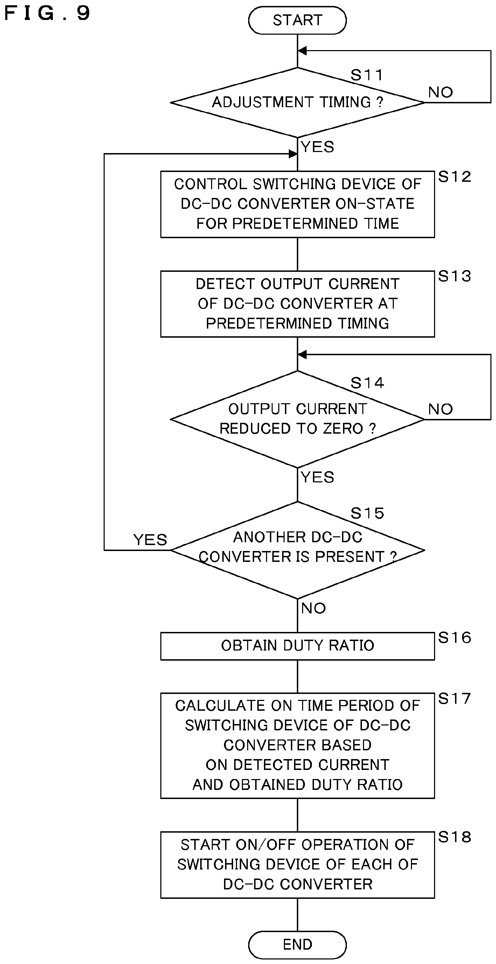

The following describes a control method for each multi-phase DC-DC converter 100 or 120 according to the above-mentioned embodiments. FIG. 9 is a flowchart illustrating one example of a processing procedure of the control of the multi-phase DC-DC converter 100 or 120 according to the present embodiments. The following description is made regarding the control device 30 as the subject of the processing. The control device 30 determines whether or not it is in an adjustment timing (S11). The adjustment timing is an operation start timing such as a time immediately after the start of the multi-phase DC-DC converter 100 or 120, a starting time of software and so on.

If it is not in an adjustment timing (NO at S11), the control device 30 continues the processing at step S11. If it is in an adjustment timing (YES at S11), the control device 30 controls the switching device of any one of the DC-DC converters in the respective phases so as to turn it on for a predetermined time (time corresponding to the duty ratio before adjustment, for example) (S12), and detects the output current of the DC-DC converter at a predetermined timing (time point immediately before the switching device is turned off, for example) (S13).

The control device 30 determines whether or not the output current of the DC-DC converter is reduced to zero (S14). If it is not reduced to zero (NO at S14), the processing at step S14 is continued. If the output current of the DC-DC converter is reduced to zero (YES at S14), it is determined whether or not another DC-DC converter for which the output current has not yet detected is present (S15). If another DC-DC converter is present (YES at S15), the control device 30 continues the processing at and after step S12.

If another DC-DC converter is not present (NO at step S15), the control device 30 obtains the duty ratio of the multi-phase DC-DC converter 100 or 120 as a whole (S16). The control device 30 calculates the ON time period of the switching device of each of the DC-DC converters based on the detected current (output current of each of the DC-DC converters) and the obtained duty ratio (S17), starts the ON/OFF operation of the switching device of each of the DC-DC converters by adjusting the ON time period of the switching device of each of the DC-DC converters based on the calculated ON time period (S18) and ends the processing.

The control method for the multi-phase DC-DC converter according to the present embodiments includes the control device 30 formed by, for example, a CPU (processor), a RAM (memory), etc., and can realize the control method for the multi-phase DC-DC converter on the computer by loading a computer program defining the procedure of each processing in the RAM (memory) and executing the computer program by the CPU (processor).

### Embodiment 3

In the above-described Embodiments 1 and 2, the adjustment timing is an operation start timing such as a time immediately after the start of the multi-phase DC-DC converter 100 or 120, a starting time of software and so on, although not limited thereto. In Embodiment 3, the adjustment timing can be regarded as a time when the multi-phase DC-DC converter is being operated. The details will be described below.

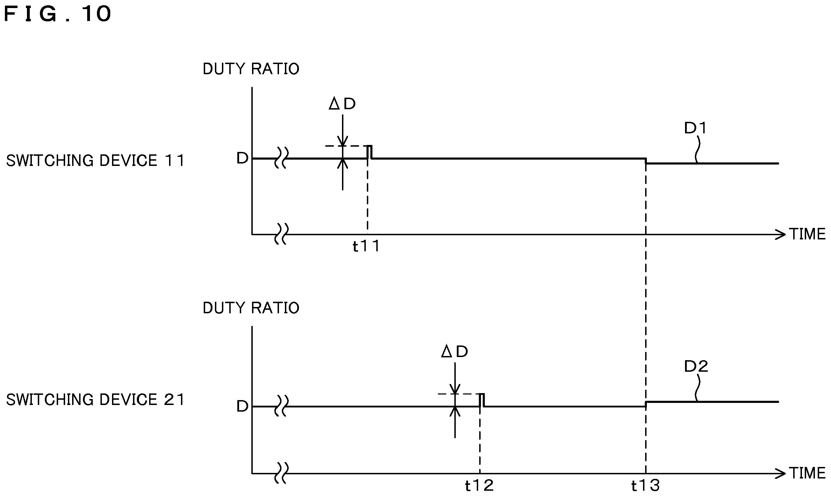

FIG. 10 is a schematic view illustrating one example of changes of duty ratios of the switching devices 11 and 21 upon adjustment by a multi-phase DC-DC converter 100 or 120 of Embodiment 3. In FIG. 10, the chart at the top depicts ON-OFF states of the switching device 11, and the chart at the bottom depicts ON-OFF states of the switching device 21. The horizontal axis represents time. Furthermore, each of the switching devices 11 and 21 is assumed to be operated at a duty ratio D.

The control unit 33 controls ON-OFF of the switching devices 11 and 21 by changing duty ratios of the switching devices 11 and 21 of the respective DC-DC converters 10 and 20 to predetermined values at different timings for a required time. The required time can appropriately be determined, and may be a time period that allows the current obtainment unit 36 to obtain output current, for example.

In the case of the two phase DC-DC converter including the two DC-DC converters 10 and 20 in the example in FIG. 10, the control unit 33 increases the duty ratio of the switching device 11 of the DC-DC converter 10 in the first phase by ΔD from the duty ratio D at a time point t11, and controls the ON-OFF of the switching device 11 of the DC-DC converter 10 in the first phase at a duty ratio (D+ΔD).

The control unit 33 then increases the duty ratio of the switching device 21 of the DC-DC converter 20 in the second phase by ΔD from the duty ratio D at a time point t12, and controls the ON-OFF of the switching device 21 of the DC-DC converter 20 in the second phase at a duty ratio (D+ΔD). The time from the time point t11 to the time point t12 may be a time required for detecting the output current of the multi-phase DC-DC converter, for example. More specifically, the time may be a time required for the output current of the multi-phase DC-DC converter to return to the original value (for example, value before the duty ratio of the switching device 11 is changed) after the duty ratio of the switching device 11 of the DC-DC converter 10 in the first phase is returned to the duty ratio D.

In the example in FIG. 10, the duty ratio of the switching device 11 is first changed. The order of changes in the duty ratio can appropriately be determined without being limited to the above-mentioned order.

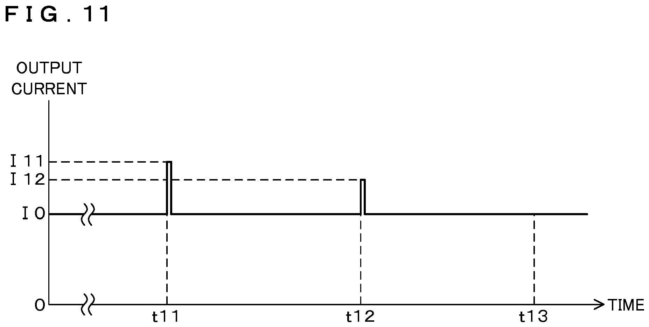

FIG. 11 is a schematic view illustrating one example of output current detected by the current detection unit 41 upon adjustment by the multi-phase DC-DC converter 100 or 120 of Embodiment 3. The output current depicted in FIG. 11 schematically depicts the current detected by the current detection unit 41. In the drawing, the horizontal axis represents time.

As illustrated in FIG. 11, in the case of the two phase DC-DC converter, for example, the output current detected by the current detection unit 41 if the duty ratio of the switching device 11 of the DC-DC converter 10 in the first phase is changed at the time point t11 is regarded as output current I11 whereas the output current detected by the current detection unit 41 if the duty ratio of the switching device 21 of the DC-DC converter 20 in the second phase is changed at the time point t12 is regarded as output current 112 (<I11). In this case, since the resistance component in implementation of the DC-DC converter 10 in the first phase is smaller than that of the DC-DC converter 20 in the second phase, the output current I11 is considered to be larger than the output current 112. Note that in the example in FIG. 11, the output current I11 > 112 is established, although not limited thereto.

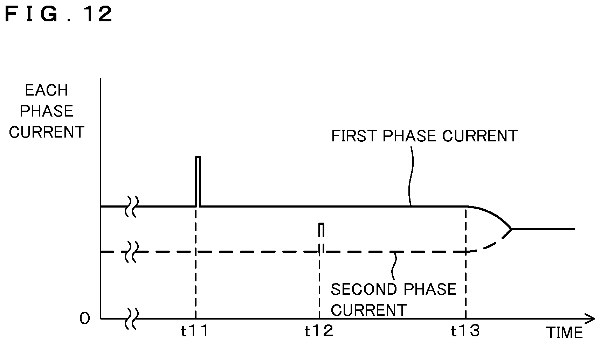

FIG. 12 is a schematic view illustrating one example of output current in each of the phases upon adjustment by the multi-phase DC-DC converter 100 or 120 of Embodiment 3. As illustrated in FIG. 12, it is assumed that the characteristics of the switching devices and etc. are changed by a load variation during the operation of the multi-phase DC-DC converter 100 or 120, and the output current of the DC-DC converter 10 in the first phase is larger than that of the DC-DC converter 20 in the second phase, for example. Here, the current detected by the current detection unit 41 is the sum of the current in the first phase and the current in the second phase. Note that in the example in FIG. 12, the current in the first phase is larger than the current in the second phase, although the relationship is not limited thereto.

By increasing the duty ratio of the switching device 11 of the DC-DC converter 10 in the first phase by ΔD at the time point t11, the current in the first phase is increased. By increasing the duty ratio of the switching device 21 of the DC-DC converter 20 in the second phase by ΔD at the time point t12, the current in the second phase is increased.

The adjustment unit 34 adjusts the ON time periods of the switching devices upon ON-OFF operation based on the output current of the respective DC-DC converters detected by the current detection unit 41 in the case that control is performed by the control unit 33.

More specifically, the adjustment unit 34 shortens the ON time period of the switching device 11 of the DC-DC converter 10 in the first phase at a time point t13 (reduces the duty ratio from D to D1, for example) as depicted in FIG. 10. This reduces the output current of the DC-DC converter 10 in the first phase (current in the first phase) as illustrated in FIG. 12.

Furthermore, the adjustment unit 34 extends the ON time period of the switching device 21 of the DC-DC converter 20 in the second phase at the time point t13 (increasing the duty ratio from D to D2, for example) as depicted in FIG. 10 to thereby increase the output current of the DC-DC converter 20 in the second phase (current in the second phase). Note that a relationship (D1+D2)=2*D can be established as to the adjusted duty ratios D1 and D2.

That is, there is no need to provide a current sensor in each DC-DC converter in each phase, so that balancing of current between the phases can be achieved at a low price. It is noted that as illustrated in FIG. 11, the output current of the multi-phase DC-DC converter as a whole can be made unchanged.

The control unit 33 can control ON-OFF of the switching devices 11 and 21 by changing the duty ratios of the switching devices 11 and 21 of the respective DC-DC converters 10 and 20 to predetermined values for required time periods in the case where the output current detected by the current detection unit 41 varies. The variation in the output current may correspond to a case where the output current is above a required range or a case where it is below a required range, for example.

When the output current of the multi-phase DC-DC converter as a whole varies due to a load variation, etc., the characteristics of the switching devices 11 and 21 of the respective DC-DC converters 10 and 20 may also be changed, and the output current of the respective DC-DC converters 10 and 20 may also be changed and unbalanced. Hence, in the case where the output current of the multi-phase DC-DC converter as a whole varies, the control unit 33 controls ON-OFF of the switching devices 11 and 21 by changing the duty ratios of the switching devices 11 and 21 of the respective DC-DC converters 10 and 20 to predetermined values at different timings for predetermined time periods, and can correct variations of the output current of the DC-DC converters 10 and 20 by comparing the output current of the DC-DC converters 10 and 20, which allows for balancing of current between the respective phases.

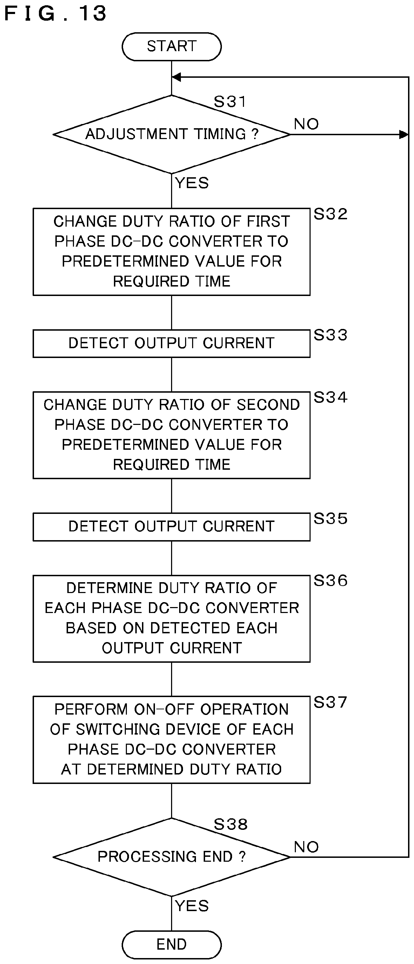

FIG.13 is a flowchart illustrating one example of a processing procedure of the control of the multi-phase DC-DC converter 100 or 120 of Embodiment 3. The following description is made regarding the subject of the processing as the control device 30. The control device 30 determines whether it is in an adjustment timing or not (S31). The adjustment timing is, for example, a case where a load variation of the multi-phase DC-DC converter 100 or 120 is present.

If it is not in an adjustment timing (NO at S31), the control device 30 continues the processing at step S31. If it is in an adjustment timing (YES at S31), the control device 30 changes the duty ratio of the DC-DC converter 10 in the first phase to a predetermined value for a required time (S32) and detects the output current of the multi-phase DC-DC converter by the current detection unit 41 (S33).

After detecting the output current by the current detection unit 41, the control device 30 changes the duty ratio of the DC-DC converter 20 in the second phase to a predetermined value for a required time (S34) and detects the output current of the multi-phase DC-DC converter by the current detection unit 41 (S35).

The control device 30 determines (adjusts) the duty ratio of the switching devices 11 and 21 of the respective DC-DC converters 10 and 20 in the phases based on the detected output current (S36) and performs ON-OFF operation of the switching devices 11 and 21 of the respective DC-DC converters 10 and 20 in the phases at the determined (adjusted) duty ratios (S37).

The control device 30 determines whether or not the processing is to be ended (S38). If the processing is not to be ended (NO at S38), the processing at and after the step S31 is continued while if the processing is to be ended (YES at S38), the processing is ended.

The control method for the multi-phase DC-DC converter of Embodiment 3 includes the control device 30 formed by, for example, a CPU (processor), a RAM (memory), etc. and can realize the control method for the multi-phase DC-DC converter on the computer by loading a computer program defining the procedure of each processing in the RAM (memory) and executing the computer program by the CPU (processor).

### Embodiment 4

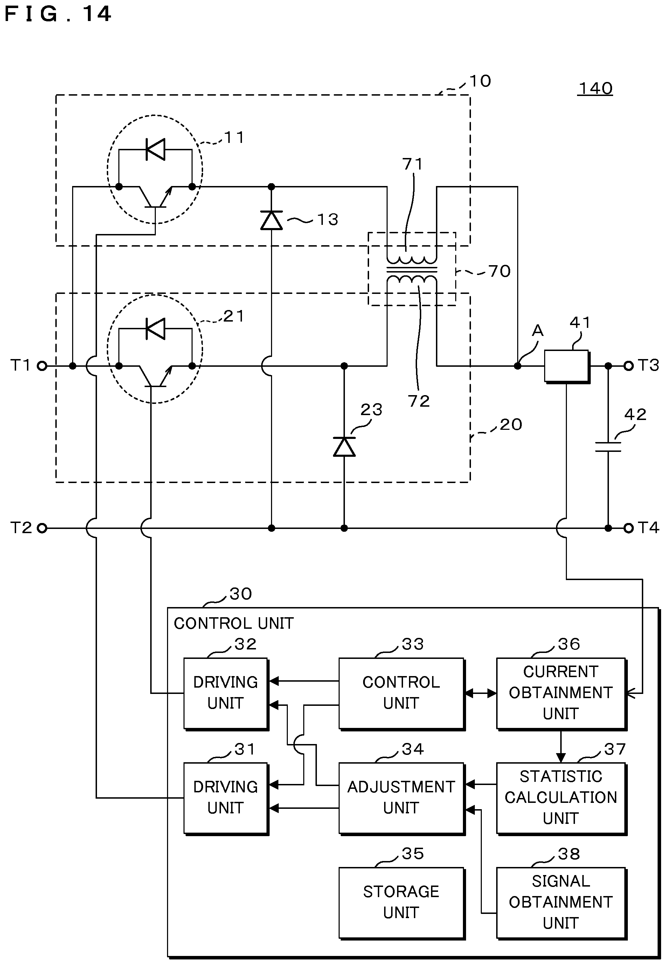

FIG. 14 is an illustrative view illustrating one example of a multi-phase DC-DC converter 140 of Embodiment 4. The difference from the multi-phase DC-DC converter 100 of Embodiment 1 is that a magnetic circuit 70 formed by two inductors (coils) 71 and 72 that are wound around a single core is provided in place of the inductors 12 and 22.

In the magnetic circuit 70, the ratio of the number of turns between the two coils 71 and 72 is 1:1, and the coils are wound in the opposite directions (opposite phases). In the case where the DC-DC converters 10 and 20 are operated, the coils 71 and 72 are magnetically connected to each other, so that by balancing the output current of the DC-DC converters 10 and 20, the magnetic fluxes can be canceled out to thereby reduce magnetic flux saturation. This makes it possible to miniaturize the coil.

That is, in the magnetic circuit 140 provided with the magnetic circuit 70 as illustrated in FIG. 14, balancing of the output current of the DC-DC converters 10 and 20 in the respective phases is important. The adjustment method in the above-described Embodiment 3 is useful in Embodiments 1 and 2 while the adjustment method is especially useful in the multi-phase DC-DC converter 140 provided with the magnetic circuit 70 of Embodiment 4 since the multi-phase DC-DC converter 140 can avoid causing the magnetic saturation by balancing the current.

It is to be understood that the embodiments disclosed here is illustrative in all respects and not restrictive. The scope of the present invention is defined by the appended claims, and all changes that fall within the meanings and the bounds of the claims, or equivalence of such meanings and bounds are intended to be embraced by the claims.

### [Description of Reference Numerals]

- 10, 20, 50, 60: DC-DC converter
- 11, 21, 51, 61: switching device
- 12, 22, 52, 62: inductor
- 13, 23: diode
- 41: current detection unit
- 42: capacitor
- 30: control unit
- 31, 32: driving unit
- 33: control unit
- 34: adjustment unit
- 35: storage unit
- 36: current obtainment unit
- 37: statistic calculation unit
- 38: signal obtainment unit
- 70: magnetic circuit
- 71, 72: coil (inductor)

## Claims

1. A multi-phase DC-DC converter including a plurality of DC-DC converters connected in parallel, each of the DC-DC converters including a switching device performing ON-OFF operation, comprising:
a current detection unit that is connected at a stage subsequent to a connection point to which an output end of each of the DC-DC converters is connected, and that detects output current of each of the DC-DC converters;
a control unit that controls the switching device of each of the DC-DC converters so as to turn on the switching device at a different timing; and
an adjustment unit that adjusts an ON time period of the switching device upon ON-OFF operation based on the output current of each of the DC-DC converters detected by the current detection unit in a case where control is performed by the control unit.

2. The multi-phase DC-DC converter according to claim 1, wherein the control unit controls the switching device so as to turn on the switching device at a different timing when the multi-phase DC-DC converter starts to operate.

3. The multi-phase DC-DC converter according to claim 1 or 2, wherein the control unit, in a case of controlling the switching device of one of the DC-DC converters so as to turn on the switching device, controls the switching device of another one of the DC-DC converters so as to turn on the switching device after the output current of the one of the DC-DC converters detected by the current detection unit is reduced to zero.

4. The multi-phase DC-DC converter according to any one of claims 1 to 3,
wherein the control unit repeatedly controls the switching device so as to turn on the switching device at a different timing for a predetermined detection time period, and
the multi-phase DC-DC converter further comprises a statistic calculation unit that calculates a statistic based on the output current of each of the DC-DC converters repeatedly detected by the current detection unit, wherein
the adjustment unit adjusts the ON time period of the switching device based on the statistic calculated by the statistic calculation unit.

5. The multi-phase DC-DC converter according to any one of claims 1 to 4, wherein the current detection unit detects the output current of each of the DC-DC converters at a time point after a predetermined time elapses from a time point when the switching device is turned on.

6. A multi-phase DC-DC converter including a plurality of DC-DC converters connected in parallel, each of the DC-DC converters including a switching device performing ON-OFF operation, comprising:
a current detection unit that is connected at a stage subsequent to a connection point to which an output end of each of the DC-DC converters is connected, and that detects output current of each of the DC-DC converters;
a control unit that controls ON-OFF of the switching device by changing a duty ratio of the switching device of each of the DC-DC converters to a predetermined value at a different timing for a required time period; and
an adjustment unit that adjusts an ON time period of the switching device upon ON-OFF operation based on the output current of each of the DC-DC converters detected by the current detection unit in a case where control is performed by the control unit.

7. The multi-phase DC-DC converter according to claim 6, wherein the control unit controls ON-OFF of the switching device by changing a duty ratio of the switching device of each of the DC-DC converters to a predetermined value for a required time period in a case where the output current detected by the current detection unit varies.

8. The multi-phase DC-DC converter according to any one of claims 1 to 7, wherein the adjustment unit, in a case where the output current of one of the DC-DC converters detected by the current detection unit is larger than the output current of another one of the DC-DC converters detected by the current detection unit, makes the ON time period of the switching device of the one of the DC-DC converters shorter than the ON time period of the switching device of said another one of the DC-DC converters.

9. The multi-phase DC-DC converter according to any one of claims 1 to 8, further comprising:
an obtainment unit that obtains a control signal concerning a required duty ratio, wherein
the adjustment unit adjusts the ON time period of the switching device such that a sum of duty ratios of the switching devices is the required duty ratio.

10. A computer program causing a computer to control a multi-phase DC-DC converter including a plurality of DC-DC converters connected in parallel, each of the DC-DC converters including a switching device performing ON-OFF operation, the computer program causing the computer to function as:
a current obtainment unit that obtains output current of each of the DC-DC converters from a current detection unit connected at a stage subsequent to a connection point to which an output end of each of the DC-DC converters is connected;
a control unit that controls the switching device of each of the DC-DC converters so as to turn on the switching device at a different timing; and
an adjustment unit that adjusts an ON time period of the switching device upon ON-OFF operation based on the obtained output current of each of the DC-DC converters in a case where control is performed by the control unit.

11. A computer program causing a computer to control a multi-phase DC-DC converter including a plurality of DC-DC converters connected in parallel, each of the DC-DC converters including a switching device performing ON-OFF operation, the computer program causing the computer to function as:
a current obtainment unit that obtains output current of each of the DC-DC converters from a current detection unit connected at a stage subsequent to a connection point to which an output end of each of the DC-DC converters is connected;
a control unit that controls ON-OFF of the switching device by changing a duty ratio of the switching device of each of the DC-DC converters to a predetermined value at a different timing for a required time period; and
an adjustment unit that adjusts an ON time period of the switching device upon ON-OFF operation based on the obtained output current of each of the DC-DC converters in a case where control is performed by the control unit.

12. A control method for a multi-phase DC-DC converter including a plurality of DC-DC converters connected in parallel, each of the DC-DC converters including a switching device performing ON-OFF operation, comprising:
detecting output current of each of the DC-DC converters by a current detection unit connected at a stage subsequent to a connection point to which an output end of each of the DC-DC converters is connected;
controlling by a control unit the switching device of each of the DC-DC converters so as to turn on the switching device at a different timing; and
adjusting by an adjustment unit an ON time period of the switching device upon ON-OFF operation based on the detected output current of each of the DC-DC converters in a case where control is performed by the control unit.

13. A control method for a multi-phase DC-DC converter including a plurality of DC-DC converters connected in parallel, each of the DC-DC converters including a switching device performing ON-OFF operation, comprising:
detecting output current of each of the DC-DC converters by a current detection unit connected at a stage subsequent to a connection point to which an output end of each of the DC-DC converters is connected;
controlling by a control unit ON-OFF of the switching device by changing a duty ratio of the switching device of each of the DC-DC converters to a predetermined value at a different timing for a required time period; and
adjusting by an adjustment unit an ON time period of the switching device upon ON-OFF operation based on the detected output current of each of the DC-DC converters in a case where control is performed by the control unit.
